# FASCICULE DE BREVET EUROPEEN

(11) **EP 2 895 356 B1**
(45) Date de publication et mention de la délivrance du brevet: **21.11.2018**
(21) Numéro de dépôt: 13758927.1
(22) Date de dépôt: 31.07.2013
(51) Int. Cl.: B60R 16/033, H02J 1/14

(54) **SYSTEME ET PROCEDE DE GESTION DE L'ALIMENTATION ELECTRIQUE D'AU MOINS UN EQUIPEMENT AU REDEMARRAGE AUTOMATIQUE D'UN MOTEUR THERMIQUE DE VEHICULE**
SYSTEM UND VERFAHREN ZUR VERWALTUNG DER STROMVERSORGUNG MINDESTENS EINES AUSRÜSTUNGSTEILS WÄHREND DES AUTOMATISCHEN NEUSTARTS EINES FAHRZEUGVERBRENNUNGSMOTORS
SYSTEM AND METHOD FOR MANAGING THE ELECTRICAL POWERING OF AT LEAST ONE PIECE OF EQUIPMENT DURING THE AUTOMATIC RESTARTING OF AN INTENAL COMBUSTION ENGINE OF A VEHICLE

(30) Priorité: 13.09.2012 FR 1258617
(43) Date de publication de la demande: 22.07.2015
(73) Titulaire: Renault S.A.S., 92100 Boulogne-Billancourt (FR)
(72) Inventeur: PLANAS, Thierry, F-78310 Maurepas (FR); GEHIN, Sebastien, F-94450 Le Mesnil Saint Denis (FR)
(86) Numéro de dépôt international: PCT/FR2013/051849
(87) Numéro de publication internationale: WO 2014/041266

(56) Documents cités:
- US-A1- 2007 188 964

## Description

La présente invention concerne les véhicules automobiles à moteur thermique équipés d'un système d'arrêt et de redémarrage automatique du moteur.

Les systèmes d'arrêt et de redémarrage automatiques du moteur thermique sont une solution dans le domaine automobile afin de réduire les émissions de dioxyde de carbone en conformité avec des réglementations de plus en plus contraignantes. Ces systèmes commandent l'arrêt automatique du moteur lorsque le véhicule est à l'arrêt ou quasiment à l'arrêt, par exemple dans des conditions de trafic dense ou à une intersection nécessitant l'arrêt du véhicule (feu tricolore au rouge, stop...). Le redémarrage automatique du véhicule est quant à lui déclenché dès que le véhicule doit se mouvoir à nouveau, typiquement lors du relâchement de la pédale de frein ou de la sollicitation de la pédale d'accélérateur ou d'embrayage.

Chaque redémarrage automatique requiert une quantité d'énergie importante et il est donc crucial de s'assurer que la batterie d'alimentation du véhicule est suffisamment chargée pour permettre le redémarrage.

Il est connu, par exemple du document WO2011/026821, de n'autoriser l'arrêt automatique du moteur que si l'état de charge ou SOC (initiales anglo-saxonnes mises pour State Of Charge) de la batterie du véhicule est suffisant pour permettre effectivement par la suite le redémarrage.

Par ailleurs, les véhicules automobiles sont de plus en plus pourvus d'équipements électriques variés. Certains équipements électriques sont dits « sécuritaires » (systèmes d'éclairage et de signalisation, avertisseur sonore, conduite assistée, freinage ABS...) et ne doivent absolument pas être coupés lorsque le véhicule est utilisé, même en position d'arrêt, alors que d'autres équipements électriques sont dits « de confort » (climatisation/chauffage, radio, ajustement sièges électriques, lève-vitres électriques...).

Il est connu, dans certains systèmes d'arrêt et de redémarrage automatique, de faire la distinction entre les équipements électriques non importants pour la sécurité et les équipements électriques importants pour la sécurité. Plus spécifiquement, il existe des systèmes qui n'autorisent pas de phase d'arrêt automatique du moteur thermique si l'état de charge de la batterie n'est pas suffisant pour assurer simultanément le maintien des fonctionnalités sécuritaires et le redémarrage du moteur. Lorsqu'une phase d'arrêt du moteur thermique est autorisée, l'alimentation électrique des équipements sécuritaires est maintenue, mais tout ou partie des équipements électriques de confort sont en revanche systématiquement coupés pour ne pas nuire au redémarrage.

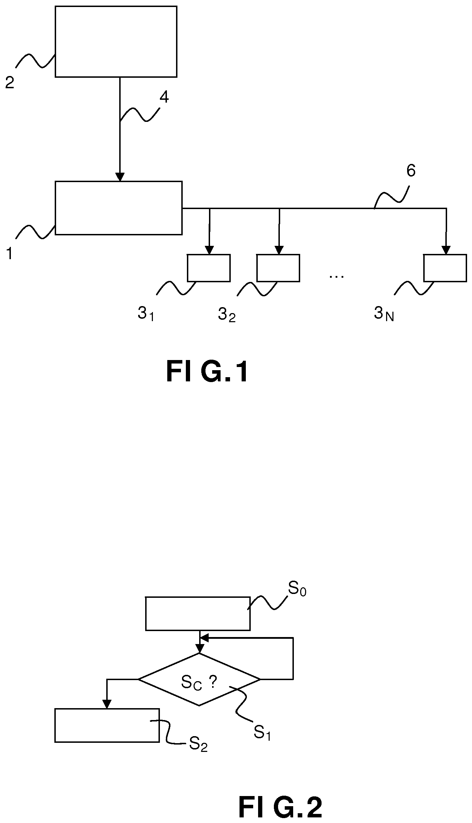

Comme illustré sur la figure 1, un système connu de gestion de l'alimentation d'équipements électriques d'un véhicule automobile comporte classiquement un module 1 apte à gérer les alimentations électriques du véhicule, connecté d'une part, au système d'arrêt et de redémarrage automatique du moteur thermique (non représenté), par exemple à un module 2 apte à gérer le redémarrage du moteur thermique lorsque les conditions requises sont réunies, et d'autre part, à une pluralité d'équipements électriques 3₁, 3₂ ...3_{N} dits de confort. Les connexions utilisées entre les différents modules et les équipements sont des liaisons 4 filaires classiques ou pour réseau local (CAN, LIN, MOST...) et des liaisons 6 d'alimentation électrique.

Les étapes de fonctionnement d'un tel système sont représentées sur la figure 2 : On part de l'hypothèse que le système d'arrêt et de redémarrage automatique a déjà autorisé un arrêt automatique du moteur thermique, de sorte que le véhicule est dans un état correspondant au moteur arrêté, comme représenté par l'étape initiale S₀. Les différents équipements électriques sont néanmoins toujours alimentés par l'intermédiaire de la batterie du véhicule. Au moment où le système d'arrêt et de redémarrage automatique doit déclencher le redémarrage, le module 2 envoie un signal de consigne S_{C} indiquant qu'un redémarrage du moteur thermique est requis. Le module 1 teste en permanence (étape S₁) s'il reçoit le signal de consigne. Le cas échéant, il applique la consigne en envoyant un signal de coupure aux différents équipements électriques de confort 3₁, 3₂ ...3_{N} et/ou aux calculateurs électroniques qui pilotent ces équipements (étape S₂).

La coupure systématique de tout ou partie des équipements de confort pose problème vis-à-vis du conducteur et/ou des passagers du véhicule, en particulier dans les situations de roulage pour lesquelles les cycles d'arrêts et de redémarrage ont une fréquence élevée. Les occupants du véhicule sont ainsi finalement tentés de désactiver la fonctionnalité d'arrêt et de redémarrage automatique pour ne pas subir les désagréments liés à ces coupures répétées.

Le document US2007/0188964 divulgue un dispositif de limitation d'alimentations de composants électriques d'un véhicule lorsqu'il a été évalué qu'une condition a été satisfaite selon laquelle ce dernier est dans un état de roulement en mode économique. Cependant une limitation d'alimentation qui peut se prolonger sur une durée plus ou moins longue tant que le véhicule est dans l'état de roulement en mode économique, présente un autre inconvénient qui est celui de nécessiter une solution au problème de ne pas générer de désagrément de l'utilisateur lié à la durée de limitation.

La présente invention a pour but de pallier les inconvénients de l'état antérieur de la technique.

Pour ce faire, l'invention a pour objet un procédé de gestion de l'alimentation électrique d'au moins un équipement électrique par une batterie d'alimentation électrique d'un véhicule automobile à moteur thermique, ledit véhicule automobile comportant un système d'arrêt et de redémarrage automatique du moteur thermique, le procédé étant caractérisé en ce qu'il comporte les étapes de :
- détermination de l'état de charge de la batterie d'alimentation électrique ;
- comparaison de l'état de charge de la batterie d'alimentation avec une valeur seuil prédéfinie ;
- coupure de l'alimentation électrique dudit au moins un équipement électrique lors du redémarrage automatique du moteur thermique si l'état de de charge de la batterie d'alimentation électrique est inférieur à la valeur seuil prédéfinie.

Selon d'autres caractéristiques possibles :
- l'étape de comparaison est précédée d'une étape de détection de la réception d'un signal de consigne indiquant qu'un redémarrage du moteur thermique est requis, envoyé par exemple par un module de gestion du redémarrage automatique du système d'arrêt et de redémarrage automatique du moteur thermique ;
- en variante, l'étape de comparaison précède un ordre de redémarrage du moteur thermique ;
- l'étape de coupure est suivie d'une étape de validation d'un ordre de redémarrage.

L'invention a également pour objet un système de gestion de l'alimentation électrique d'au moins un équipement électrique par une batterie d'alimentation électrique d'un véhicule automobile à moteur thermique, ledit véhicule automobile comportant un système d'arrêt et de redémarrage automatique du moteur thermique, le système de gestion étant caractérisé en ce qu'il comporte un module de supervision de délestage électrique apte à comparer l'état de charge de la batterie d'alimentation avec une valeur seuil prédéfinie et à commander la coupure de l'alimentation électrique dudit au moins un équipement électrique lors du redémarrage automatique du moteur thermique si l'état de de charge de la batterie d'alimentation électrique est inférieur à la valeur seuil prédéfinie.

Le module de supervision de délestage électrique peut être apte à déterminer ledit état de charge de la batterie d'alimentation à partir de paramètres environnementaux et de mesures d'une tension et d'un courant de batterie.

Le système peut comprendre une ou plusieurs liaisons pour relier directement ledit module de supervision audit au moins un équipement électrique de façon à couper son alimentation électrique.

Le module de supervision peut être relié par une liaison de façon à délester, par une information inter-système de requête de délestage, ledit au moins un équipement électrique.

Le système peut comprendre un module relié au module de supervision par une liaison de façon à délester, par une information inter-système de requête de délestage, les alimentations électriques dudit au moins un équipement électrique.

L'invention et les différents avantages qu'elle procure seront mieux compris au vu de la description suivante, faite en référence aux figures annexées, dans lesquelles :
- la figure 1, déjà décrite, illustre schématiquement un système connu pour la gestion de l'alimentation des équipements électriques lors d'un redémarrage du moteur thermique d'un véhicule automobile ;
- la figure 2, déjà décrite, représente les étapes du procédé de gestion généralement implémenté avec le système de la figure 1 ;
- la figure 3 illustre schématiquement un système de gestion de l'alimentation des équipements électriques lors d'un redémarrage conformément à un premier mode de réalisation de l'invention ;
- la figure 4 décrit les étapes pouvant être mises en oeuvre par le système de la figure 3, selon un premier procédé de gestion conforme à l'invention ;
- la figure 5 décrit les étapes pouvant être mises en oeuvre par le système de la figure 3, selon un deuxième procédé de gestion conforme à l'invention ;
- la figure 6 représente schématiquement un système de gestion de l'alimentation des équipements électriques lors d'un redémarrage conformément à un deuxième mode de réalisation de l'invention ;
- la figure 7 est une variante du système de gestion de la figure 6.

Dans l'ensemble de l'exposé, les éléments communs aux différentes figures portent les mêmes références.

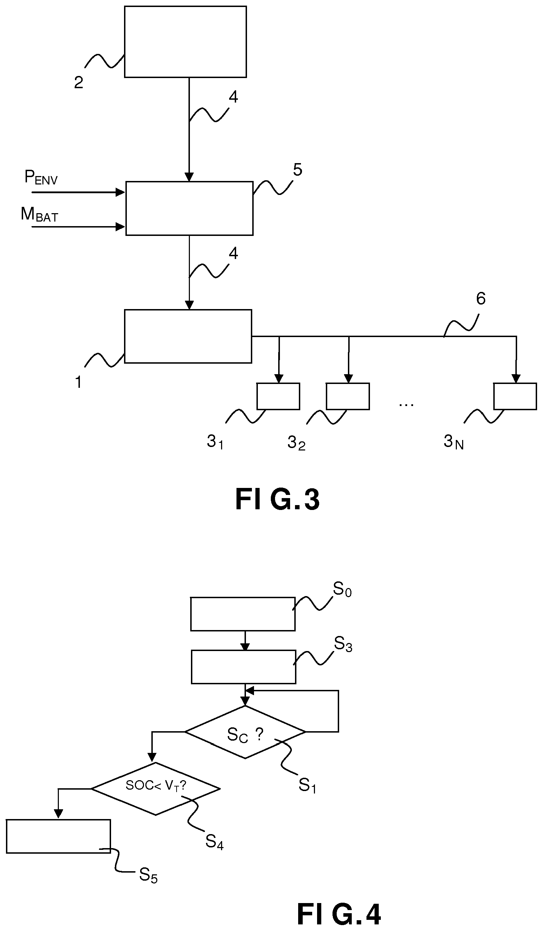

On retrouve sur la figure 3 une configuration d'un système équipant un véhicule automobile, similaire à celui déjà décrit en référence à la figure 1, avec un système 1 de gestion de l'alimentation électrique d'une pluralité d'équipements 3₁, 3₂ ...3_{N} de confort par l'intermédiaire de la batterie (non représentée) du véhicule et un module 2 gérant le redémarrage du moteur thermique (non représenté) du véhicule. A la différence de la figure 1 cependant, le système de gestion selon l'invention comporte ici un module 5 de supervision du délestage relié d'une part, au module 2 de redémarrage automatique, et d'autre part au système 1 de gestion de l'alimentation électrique des équipements 3₁, 3₂ ...3_{N}. Les connexions utilisées entre les différents modules et les équipements sont des liaisons 4 filaires classiques ou pour réseau local (CAN, LIN, MOST...) et des liaisons 6 d'alimentation électrique.

Le module 5 de supervision du délestage est apte à évaluer, à partir de paramètres environnementaux P_{ENV} tels que la température et le vieillissement et de mesures M_{BAT} de tension et de courant réalisées sur la batterie, l'état de charge SOC de la batterie. En variante, le module 5 pourrait recevoir une détermination de l'état de charge SOC par un autre équipement, par exemple un module de gestion de la batterie. Dans tous les cas, le module 5 de supervision du délestage va utiliser cet état de charge pour décider s'il convient de couper l'alimentation électrique d'un ou de plusieurs desdits équipements de confort 3₁, 3₂ ...3_{N} lorsqu'un arrêt automatique du moteur thermique a été réalisé, et qu'il convient de redémarrer ce moteur.

Un exemple de fonctionnement du système selon l'invention est explicité en référence à la figure 4 : On retrouve sur cette figure l'étape initiale S₀ correspondant au véhicule dans la situation « moteur arrêté », tous les équipements électriques de confort 3₁, 3₂ ...3_{N} étant néanmoins toujours alimentés par la batterie du véhicule. Lors de l'étape S₃, le module 5 de supervision du délestage détermine l'état de charge SOC de la batterie à partir des paramètres environnementaux P_{ENV} et des mesures de batterie M_{BAT} qu'il reçoit. Le module 5 vérifie en outre, à l'étape S₁, s'il reçoit du module 2 de gestion du redémarrage automatique, un signal S_{C} de consigne indiquant qu'un redémarrage du moteur thermique est requis. Dès réception de ce signal S_{C} de consigne, le module 5 compare alors l'état de charge SOC déterminé à l'étape S₃ avec une valeur seuil V_{T} prédéfinie (étape S₄). La valeur seuil V_{T} est ajustée au préalable, par exemple en usine, en fonction des équipements électriques de confort équipant le véhicule automobile, ou d'un sous ensemble de tels équipements de confort, de manière à indiquer l'état de charge minimal que la batterie doit avoir pour permettre un redémarrage automatique tout en laissant les équipements électriques de confort alimentés. Ainsi, en utilisation, la coupure de l'alimentation électriques des équipements de confort (ou des calculateurs électroniques pilotant ces équipements électriques) n'est commandée par le module 5 de supervision de délestage que si l'état de charge SOC est inférieur à la valeur seuil V_{T} (étape S₅). Dans les autres cas, le redémarrage est effectué en maintenant alimentés les équipements de confort.

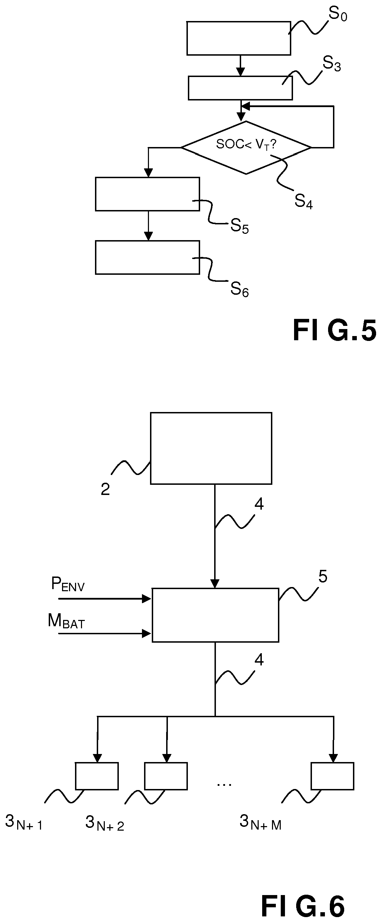

Dans certains cas, selon les véhicules automobiles, le module 2 de gestion du redémarrage automatique, le module 5 de supervision du délestage et le système 1 de gestion électrique peuvent être assez éloignés les uns des autres. Il en résulte des temps d'échange de données via les liaisons 4 qui peuvent être assez importants, avec le risque que l'ordre de coupure ne soit pas reçu suffisamment tôt. La figure 5 illustre une autre façon d'utiliser le système de gestion selon l'invention, permettant de s'affranchir de ce problème : Ici, le module 5 de supervision du délestage n'attend pas de recevoir un signal de consigne indiquant qu'un ordre de redémarrage est requis. De manière différente, il détermine l'état de charge (étape S₃) et compare cet état de charge (étape S₄) avec la valeur seuil V_{T}, puis ordonne la coupure d'au moins un équipement électrique (étape S₅) dans le cas où l'état de charge est inférieur à la valeur seuil V_{T}. Le module 5 de supervision envoie alors au module 2 de gestion du redémarrage automatique un signal de validation indiquant qu'un redémarrage peut être effectué (étape S₆). En anticipant ainsi la consigne de redémarrage, on s'assure que toutes les conditions sont réunies pour permettre un redémarrage automatique du moteur, même si l'état de charge de la batterie n'est pas assez important pour permettre également le maintien des équipements de confort.

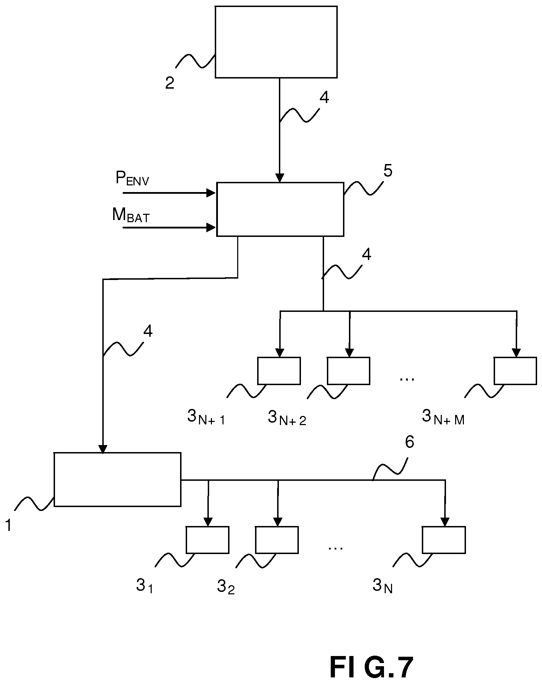

Dans le cas de l'architecture de la figure 3, les ordres de coupure sont envoyés par le module 5 de supervision du délestage au système 1 de gestion de l'alimentation électrique. D'autres architectures sont néanmoins envisageables, sans départir du cadre de la présente invention. Ainsi, comme illustré sur la figure 6, le module 5 de supervision du délestage est directement connecté aux différents équipements électriques de confort 3_{N+1}, 3_{N+2} ...3_{N+M}. La figure 7 illustre quant à elle une autre variante dans laquelle le module 5 de supervision du délestage est relié :
- d'une part, à N équipements électriques de confort 3₁, 3₂ ...3_{N} par l'intermédiaire d'un système 1 de gestion de l'alimentation électrique de ces équipement, et
- d'autre part, directement à M autres équipements électriques de confort 3_{N+1} à 3_{N+M}.

On remarque par ailleurs que, dans l'invention, il n'est pas nécessaire de se préoccuper de savoir si les équipements électriques de confort ont été activés ou non par les occupants du véhicule avant un ordre de redémarrage automatique.

## Revendications

1. Système de gestion de l'alimentation électrique d'au moins un équipement électrique (3₁, 3₂ ...3_{N} ; 3_{N+1}, 3_{N+2}, ..., 3_{N+M}) par une batterie d'alimentation électrique d'un véhicule automobile à moteur thermique, ledit véhicule automobile comportant un système d'arrêt et de redémarrage automatique du moteur thermique, le système de gestion étant **caractérisé en ce qu'**il comporte un module (5) de supervision de délestage électrique apte à comparer l'état de charge de la batterie d'alimentation avec une valeur seuil (V_{T}) prédéfinie et à commander la coupure de l'alimentation électrique dudit au moins un équipement électrique lors du redémarrage automatique du moteur thermique si l'état de charge (SOC) de la batterie d'alimentation électrique est inférieur à la valeur seuil prédéfinie.

2. Système de gestion selon la revendication 1, **caractérisé en ce que** le module (5) de supervision de délestage électrique est apte à déterminer ledit état de charge de la batterie d'alimentation à partir de paramètres environnementaux (P_{ENV}) et de mesures (M_{BAT}) d'une tension et d'un courant de batterie.

3. Système de gestion selon l'une quelconque des revendications 1 ou 2, **caractérisé en ce qu'**il comprend une ou plusieurs liaisons (4) pour relier directement ledit module (5) de supervision audit au moins un équipement électrique (3_{N+1}, 3_{N+2}, ..., 3_{N+M}) de façon à couper son alimentation électrique.

4. Système de gestion selon la revendication 3, **caractérisé en ce qu'**il comprend un module (5) de supervision relié par une liaison (4) de façon à délester, par une information inter-système de requête de délestage, ledit au moins un équipement électrique (3_{N+1}, 3_{N+2} ...3_{N+M}).

5. Système de gestion l'une quelconque des revendications 1 ou 2, **caractérisé en ce qu'**il comprend un module (1) relié au module (5) de supervision par une liaison (4) de façon à délester, par une information inter-système de requête de délestage, les alimentations électriques (6) dudit au moins un équipement électrique (3₁, 3₂ ...3_{N}).

6. Procédé de gestion de l'alimentation électrique d'au moins un équipement électrique (3₁, 3₂ ...3_{N}) par une batterie d'alimentation électrique d'un véhicule automobile à moteur thermique, ledit véhicule automobile comportant un système d'arrêt et de redémarrage automatique du moteur thermique, le procédé étant **caractérisé en ce qu'**il comporte les étapes de :
- détermination (S₃) de l'état de charge de la batterie d'alimentation électrique ;
- comparaison (S₄) de l'état de charge de la batterie d'alimentation avec une valeur seuil (V_{T}) prédéfinie ;
- coupure (S₅) de l'alimentation électrique dudit au moins un équipement électrique (3₁, 3₂ ...3_{N}) lors du redémarrage automatique du moteur thermique si l'état de de charge (SOC) de la batterie d'alimentation électrique est inférieur à la valeur seuil (V_{T}) prédéfinie.

7. Procédé selon la revendication 6, **caractérisé en ce que** l'étape (S₄) de comparaison est précédée d'une étape (S₁) de détection de la réception d'un signal (S_{C}) de consigne indiquant qu'un redémarrage du moteur thermique est requis.

8. Procédé selon la revendication 7, **caractérisé en ce que** ledit signal (S_{C}) de consigne est envoyé par un module (2) de gestion du redémarrage automatique du système d'arrêt et de redémarrage automatique du moteur thermique.

9. Procédé selon la revendication 6, **caractérisé en ce que** l'étape (S₄) de comparaison précède un ordre de redémarrage du moteur thermique.

10. Procédé selon la revendication 9, **caractérisé en ce que** l'étape (S₅) de coupure est suivie d'une étape (S₆) de validation d'un ordre de redémarrage.

## Patentansprüche

1. System zum Steuern der Stromversorgung von mindestens einem elektrischen Gerät (3₁, 3₂ ... 3_{N}; 3_{N+1}, 3_{N+2}, ..., 3_{N+M}) durch eine Stromversorgungsbatterie eines Kraftfahrzeugs mit einem Verbrennungsmotor, wobei das Kraftfahrzeug ein System zum automatischen Stoppen und Neustarten des Verbrennungsmotors aufweist. Das Managementsystem wird **dadurch gekennzeichnet, dass** es ein elektrisches Lastabwurf-Überwachungsmodul (5) aufweist, das den Ladezustand der Versorgungsbatterie mit einem vorbestimmten Schwellenwert (V_{T}) vergleicht und das Abschalten der Stromversorgung von mindestens einem elektrischen Gerät während des automatischen Neustarts des Verbrennungsmotors veranlasst, wenn der Ladezustand (SOC) der Stromversorgungsbatterie unter dem vordefinierten Schwellenwert liegt.

2. Managementsystem nach Anspruch 1, **dadurch gekennzeichnet, dass** das elektrische Lastabwurf-Überwachungsmodul (5) in der Lage ist, den Ladezustand der Stromversorgungsbatterie aus Umgebungsparametern (P_{ENV}) und Messungen (M_{BAT}) einer Spannung und eines Batteriestroms zu bestimmen.

3. Managementsystem nach einem der Ansprüche 1 oder 2, **dadurch gekennzeichnet, dass** es eine oder mehrere Verbindungen (4) zum direkten Verbinden des Überwachungsmoduls (5) mit mindestens einem elektrischen Gerät (3_{N+1}, 3_{N+2}, ..., 3_{N+M}) beinhaltet, um die Stromversorgung zu unterbrechen.

4. Managementsystem nach Anspruch 3, **dadurch gekennzeichnet, dass** es ein Überwachungsmodul (5) umfasst, das durch eine Verbindung (4) verbunden ist, um durch Intersystem-Lastabwurfanforderungsinformationen wenigstens ein elektrisches Gerät (3_{N+1}, 3_{N+2} ... 3_{N+M}) zu entlasten.

5. Managementsystem einem der Ansprüche 1 oder 2, **dadurch gekennzeichnet, dass** es ein Modul (1) umfasst, das mit dem Überwachungsmodul (5) durch eine Verbindung (4) verbunden ist, um durch Intersystem-Lastabwurfanforderungsinformationen die Stromversorgungen (6) mindestens eines elektrischen Geräts (3₁, 3₂ ... 3_{N}) zu entlasten.

6. Verfahren zur Steuerung der Energieversorgung von mindestens einem elektrischen Gerät (3₁, 3₂ ... 3_{N}) durch eine Stromversorgungsbatterie eines Kraftfahrzeugs mit einem Verbrennungsmotor, wobei das Kraftfahrzeug ein Stoppsystem und einen automatischen Neustart des Verbrennungsmotors aufweist. Das Verfahren ist **dadurch gekennzeichnet, dass** es die folgenden Schritte umfasst:
- Bestimmen (S₃) des Ladezustands der Stromversorgungsbatterie;
- Vergleichen (S₄) des Ladezustands der Versorgungsbatterie mit einem vordefinierten Schwellenwert (V_{T});
- Abschalten (S₅) der Stromversorgung von mindestens einem elektrischen Gerät (3₁, 3₂ ... 3_{N}) während des automatischen Neustarts des Verbrennungsmotors, wenn der Ladezustand (SOC) der Stromversorgungsbatterie geringer ist als der vordefinierte Schwellenwert (V_{T}).

7. Verfahren nach Anspruch 6, **dadurch gekennzeichnet, dass** dem Vergleichsschritt (S₄) ein Schritt (S₁) zum Erfassen des Empfangs eines Referenzsignals (S_{C}) vorangeht, das anzeigt, dass ein Neustart des Verbrennungsmotors erforderlich ist.

8. Verfahren nach Anspruch 7, **dadurch gekennzeichnet, dass** das Referenzsignal (S_{C}) von einem Modul (2) zum Verwalten des automatischen Neustarts des Systems zum automatischen Abschalten und Neustarten des Verbrennungsmotors gesendet wird.

9. Verfahren nach Anspruch 6, **dadurch gekennzeichnet, dass** der Vergleichsschritt (S₄) einem Neustart-Befehl des Verbrennungsmotors vorangeht.

10. Verfahren nach Anspruch 9, **dadurch gekennzeichnet, dass** dem Schritt (S₅) des Abschaltens ein Schritt (S₆) der Validierung eines Neustart-Befehls folgt.

## Claims

1. System for managing the electrical power supply of at least one item of electrical equipment (3₁, 3₂, ..., 3_{N}; 3_{N+1}, 3_{N+2}, ..., 3_{N+M}) by an electrical power supply battery of a combustion-engine motor vehicle, said motor vehicle including a system for automatically stopping and restarting the combustion engine, the management system being **characterized in that** it includes an electrical load-shedding supervision module (5) able to compare the state of charge of the power supply battery with a predefined threshold value (V_{T}) and able to command the cutting-off of the electrical power supply for said at least one item of electrical equipment during the automatic restarting of the combustion engine if the state of charge (SOC) of the electrical power supply battery is less than the predefined threshold value.

2. Management system according to Claim 1, **characterized in that** the electrical load-shedding supervision module (5) is able to determine said state of charge of the power supply battery from environmental parameters (P_{ENV}) and from measurements (M_{BAT}) of a battery voltage and current.

3. Management system according to either Claim 1 or claim 2, **characterized in that** it comprises one or more links (4) in order to directly connect said supervision module (5) to said at least one item of electrical equipment (3_{N+1}, 3_{N+2}, ..., 3_{N+M}) so as to cut off its electrical power supply.

4. Management system according to Claim 3, **characterized in that** it comprises a supervision module (5) connected by a link (4) so as to load-shed, via an inter-system load-shedding request indication, said at least one item of electrical equipment (3_{N+1}, 3_{N+2}, ..., 3_{N+M}).

5. Management system according to either Claim 1 or claim 2, **characterized in that** it comprises a module (1) connected to the supervision module (5) by a link (4) so as to load-shed, via an inter-system load-shedding request indication, the electrical power supplies (6) of said at least one item of electrical equipment (3₁, 3₂, ..., 3_{N}).

6. Method for managing the electrical power supply of at least one item of electrical equipment (3₁, 3₂, ..., 3_{N}) by an electrical power supply battery of a combustion-engine motor vehicle, said motor vehicle including a system for automatically stopping and restarting the combustion engine, the method being **characterized in that** it includes the steps of:
- determining (S₃) the state of charge of the electrical power supply battery;
- comparing (S₄) the state of charge of the power supply battery with a predefined threshold value (V_{T});
- cutting off (S₅) the electrical power supply of said at least one item of electrical equipment (3₁, 3₂, ..., 3_{N}) during the automatic restarting of the combustion engine if the state of charge (SOC) of the electrical power supply battery is less than the predefined threshold value (V_{T}).

7. Method according to Claim 6, **characterized in that** the comparison step (S₄) is preceded by a step (S₁) for detecting the reception of an instruction signal (S_{C}) indicating that a restarting of the combustion engine is required.

8. Method according to Claim 7, **characterized in that** said instruction signal (S_{C}) is sent by an automatic restarting management module (2) of the system for automatically stopping and restarting the combustion engine.

9. Method according to Claim 6, **characterized in that** the comparison step (S₄) precedes an order for restarting the combustion engine.

10. Method according to Claim 9, **characterized in that** the cutoff step (S₅) is followed by a step (S₆) for validating a restarting order.
